# EUROPÄISCHE PATENTSCHRIFT

(11) **EP 2 066 416 B1**
(45) Veröffentlichungstag und Bekanntmachung des Hinweises auf die Patenterteilung: **31.08.2011**
(21) Anmeldenummer: 07800636.8
(22) Anmeldetag: 12.09.2007
(51) Int. Cl.: B01D 9/00, C07B 63/04

(54) **VERFAHREN ZUR REINIGUNG VON IONISCHEN FLÜSSIGKEITEN**
METHOD OF PURIFYING IONIC LIQUIDS
PROCÉDÉ DE PURIFICATION DE LIQUIDES IONIQUES

(30) Priorität: 12.09.2006 CH 14572006
(43) Veröffentlichungstag der Anmeldung: 10.06.2009
(73) Patentinhaber: Sulzer Chemtech AG, 8404 Winterthur (CH)
(72) Erfinder: KÖNIG, Axel, 91074 Herzogenaurach (DE); STEPANSKI, Manfred, 9470 Buchs (CH); KUSZLIK, Andrzej, 9470 Buchs (CH)
(74) Vertreter: Gernet, Samuel Andreas
(86) Internationale Anmeldenummer: PCT/CH2007/000445
(87) Internationale Veröffentlichungsnummer: WO 2008/031246

(56) Entgegenhaltungen:
- EP-A2- 0 491 558
- WO-A-2006/045795
- DE-A1-102004 027 196
- DE-A1-102004 058 907

## Beschreibung

### Gebiet der Erfindung

Die vorliegende Erfindung betrifft ein Verfahren zur Reinigung von Ionischen Flüssigkeiten gemäss Oberbegriff von Anspruch 1.

### Stand der Technik

Die WO2006/061188 lehrt, zur Aufreinigung einer ionischen Flüssigkeit dieselbe aus ihrer Schmelze partiell zu kristallisieren und das bei der Kristallisation gebildete Kristallisat von der Restschmelze abzutrennen. Die Kristallisation kann dabei dynamisch oder statisch durchgeführt werden. Gemäss der WO2006/061188 können alle Arten von bekannten ionischen Flüssigkeiten mittels partieller Kristallisation gereinigt werden. Die WO 2006/061188 offenbart alle Merkmale des Oberbegriffs von Anspruch 1.

Die DE-A-10 2004 027196 betrifft ein Verfahren für die Kristallisation von Polymeren und Biopolymeren mit einem Molekulargewicht von > 1000 g/mol unter Zuhilfenahme von ionischen Flüssigkeiten. Gemäss dem Verfahren der DE-A-10 2004 027196 werden di e Polymere und Biopolymere in einem Lösemittelgemisch gelöst, von welchem ein oder mehrere Lösemittel ionische Flüssigkeiten sind. Der Anteil an ionischer Flüssigkeit beträgt dabei mehr als 50 oder vorzugsweise mehr als 80 Volumenprozente. Das Prinzip des Verfahrens besteht nun darin, zur Erreichung einer Kristallisation der gewünschten Polymere oder Biopolymere deren Löslichkeit im Lösemittelgemisch zu verändern. Dabei wird gemäss einer ersten Variante eine gesättigte Lösung einer zu kristallisierenden Verbindung in einer ionischen Flüssigkeit hergestellt. Diese Lösung wird in einen Gasraum gebracht, der eine bestimmte Konzentration eines Fällungsmittels enthält. Im Zeitablauf sättigt sich nun aus dem Gasraum langsam mit dem Fällungsmittel bis zur Gleichgewichtseinstellung. Wenn die Gleichgewichtskonzentration des Fällungsmittels in der ionischen Flüssigkeit für eine Ausfällung ausreicht, finden sich in der ionischen Flüssigkeit Kristalle des zu kristallisierenden Polymers oder Biopolymers.

Gemäss einer zweiten Variante ist das zu kristallisierende Polymer in der ionischen Flüssigkeit wenig löslich, hingegen in einem mit der Ionischen Flüssigkeit mischbaren Cosolvens gut löslich. Das Polymer wird nun einer Mischung aus der ionischen Flüssigkeit und Cosolvens gelöst und eine gesättigte Lösung hergestellt. Diese Mischung wird in den Gasraum gebracht, der arm an gasförmigem Cosolvens ist. Das Cosolvens verdampft langsam aus dem Gemisch mit der ionischen Flüssigkeit und hinterlässt eine ionische Flüssigkeit mit Kristallen des gewünschten Polymers. Beim vorbeschriebenen Verfahren geht es nicht um die Reinigung von ionischen Flüssigkeiten, sondern um die Reinigung von Polymeren unter Einsatz von ionischen Flüssigkeiten. Diese liegen während des ganzen Verfahrens im flüssigen Aggregatzustand vor.

Ein bekanntes Problem von ionischen Flüssigkeiten ist, dass sie im Allgemeinen nicht gerne kristallisieren, weil diese ein hohes Maß an Asymmetrie aufweisen. Dies behindert oder verunmöglicht die Kristallisation. Auch zeigen viele ionische Flüssigkeiten ein kompliziertes Phasenverhalten. Die Folge davon ist, dass viele ionische Flüssigkeiten beim Abkühlen glasartige Strukturen ausbilden. Ionische Flüssigkeiten besitzen oft eine hohe Viskosität und neigen ausserdem zu starker Unterkühlung bis hin zu einer glasartigen Erstarrung.

Manche ionische Flüssigkeiten, wie z.B. das EMIM-Chlorid, bilden zwei Kristallmodifikationen, von denen die höher schmelzende die für die Trennung günstigere Kristallform ist. Bei Neigung zur Unterkühlung bilden sich bei der Unterschreitung des Erstarrungspunktes der höher schmelzenden Modifikation keine Kristalle. Erst nach der Umwandlungstemperatur fängt die niedriger schmelzende Modifikation an auszukristallisieren.

Erst nach Unterschreitung der Phasenumwandlungstemperatur fängt die niedriger schmelzende Modifikation an auszukristallisieren. In extremen Fällen kommt es gar nicht zur Kristallbildung während des Abkühlens, selbst wenn die Temperatur erheblich unter die Phasenumwandlungstemperatur abgesenkt wurde. Eine solche Flüssigkeit erstarrt dann amorph.

Bei einer hohen Viskosität der Flüssigkeit erfolgt der molekulare Stofftransport langsam, wodurch sehr kleine Kristalle wachsen. Ein solches Wachstum ist für die nachfolgende Trennung von Restschmelze und Kristalle nachteilig. Ein solches ungünstiges Wachstum kann durch Verlangsamung der Wachstumsrate der Kristalle vermieden werden, indem die Flüssigkeit langsamer gekühlt wird. Dies ist jedoch bei industriellen Prozessen grundsätzlich unerwünscht.

Im Rahmen der vorliegenden Erfindung sollen als ionische Flüssigkeiten Salze mit organischen Verbindungen verstanden, welche unterhalb von 150 °C und vorzugsweise unterhalb von 100 °C in flüssigem Zustand vorliegen. In der WO2006/061188 und der DE-A-10 2004 027196 ist eine grosse Zahl von möglichen ionischen Verbindungen aufgelistet.

### Aufgabe der Erfindung

Ausgehend von diesem Stand der Technik stellt sich die Erfindung zur Aufgabe, ein verbessertes Reinigungsverfahren für ionische Flüssigkeiten vorzuschlagen, welches die oben erwähnten Nachteile weitgehend vermeidet.

Erfindungsgemäss wird die Aufgabe bei einem Verfahren gemäss Oberbegriff von Anspruch 1 durch die Merkmale des kennzeichens von Anspruch 1 gelöst. Als Entrainer-Sustanz wird allgemein ein Schleppmittel verstanden, welches die Verteilung der unerwünschten Komponenten zwischen der festen und flüssigen Phase im Sinne des Trennprozesses günstig beeinflusst. Die gezielte Zugabe von Entrainer-Substanzen hat ausserdem den Vorteil, dass die Viskosität der Flüssigkeit (Schmelze) herabgesetzt werden kann, und dadurch der Stofftransport intensiviert wird (sowohl durch Diffusion als auch durch Konvektion). Dadurch wird die Trennwirkung gesteigert, indem bei gegebener Wachstumsgeschwindigkeit grössere Kristalle erzeugt werden, was zu einer wesentlich besseren Abtrennung fest/flüssig führt.

Vorteilhaft wird als Entrainer-Substanz eine Verbindung eingesetzt mit strukturähnlichen Eigenschaften zur ionischen Flüssigkeit oder zu den in der ionischen Flüssigkeit enthaltenen Verunreinigungen. Beispielsweise kann bei der Kristallisation von EMIM - Chlorid (1-Ethyl-3-methylimidazolium-Chlorid) 1-Methylimidazol zugesetzt werden. Dadurch kann die Verteilung der Verunreinigung zwischen Flüssigkeit (Schmelze) und Kristallisat günstig beeinflusst werden. Dies äussert sich darin, dass weniger Verunreinigung im Kristallisat eingebaut wird.

Vorteilhaft wird als Entrainer-Substanz eine Verbindung eingesetzt mit strukturähnlichen Eigenschaften zu den in der ionischen Flüssigkeit enthaltenen Verunreinigungen. Die gezielte Zugabe einer solchen Entrainer-Substanz hat den Vorteil, dass die Löslichkeit der Verunreinigungen erhöht wird und diese dadurch verstärkt in der Flüssigkeit verbleiben. Grundsätzlich kann als Schleppmittel auch ein Gemisch von Verbindungen (Schleppmitteln) zugesetzt werden.

Vorteilhaft beträgt die gewichtsmässige Menge der zur verunreinigten ionischen Flüssigkeit zugesetzten Entrainer-Substanz weniger als 50 Gewichtsprozente, vorzugsweise weniger als 30 Gewichtsprozente und ganz besonders bevorzugt weniger als 10 Gewichtsprozente der ionischen Flüssigkeit. Das heisst, in der Praxis wird der Fachmann in der Regel nur gerade eine solche Menge einer Entrainer-Substanz zugeben, bei welcher sich die gewünschte Verbesserung der Löslichkeit der Verunreinigungen bzw. ganz allgemein die gewünschte Steigerung der Trennwirkung ergibt. Denn durch die Zugabe einer Entrainer-Substanz wird der Schmelzpunkt der ionischen Flüssigkeit im Allgemeinen herabgesetzt, sodass u. U. zur Durchführung des Kristallisationsprozesses mehr Energie erforderlich ist.

Unter strukturähnlichen Eigenschaften soll verstanden werden, dass die Entrainer-Substanz beispielsweise die gleiche Grundstruktur wie die ionische Flüssigkeit oder eine ähnliche Polarität hat, sodass deren Löslichkeit heraufgesetzt wird, jedoch typischerweise selbst nicht ionisch ist.

Als Entrainer-Substanz können auch bekannte klassische Lösungsmittel eingesetzt werden, welche strukturähnliche Eigenschaften zu den in der zu reinigenden ionischen Flüssigkeit enthaltenen Verunreinigungen auf weisen. Als Lösungsmittel kommen beispielsweise in Frage: Methanol, Ethanol, i-Propanol, Butanol, Pentan, Hexan, Aceton, Methylethylketon, Furan, Dimethylsulfoxid, Toluol, Benzol, Essigsäuremethylester, Essigsäureethylester, oder ein Gemisch von einem oder mehren der vorgenannten Lösungsmittel.

Vorteilhaft wird die Kristallisation unter Überdruck durchgeführt und als Entrainer-Substanz werden in der ionischen Flüssigkeit lösliche Gase wie CO₂, CH₄, N₂ eingesetzt. Der Einsatz von löslichen Gasen hat den Vorteil, dass die Gase wieder leicht ausgetrieben werden können. Denkbar ist auch, als Entrainer-Substanz in der ionischen Flüssigkeit kondensierbare Gase wie Methan, Ethan, Propan, n-Butan oder halogenierte Kohlenwasserstoffe wie z. B. Chlormetan einzusetzen. Auch diese Gase können bei leicht erhöhter Temperatur wieder ausgetrieben werden.

Entrainer-Substanzen können bei der statischen und dynamischen Kristallisation von ionischen Flüssigkeiten eingesetzt werden. Bei der statischen Kristallisation erfolgt keine von aussen erzwungene Konvektion der flüssigen Phase, und die Kristalle bilden sich an Kühlflächen aus, welche im Kristallisator angeordnet sind.

Bei der dynamischen Kristallisation wird die flüssige Phase gerührt oder zirkuliert. Bekannte dynamische Kristallisationsmethoden sind: Suspensionskristallisation, Kristallisation vom Typ des voll durchströmten Rohres oder Fallfilmkristallisation. Die vorerwähnten Kristallisationsmethoden sind beispielsweise in der US 5,504,247 und WO2006/061188, deren Inhalt hiermit unter Bezugnahme aufgenommen, näher beschrieben.

Grundsätzlich kann ein ein- oder mehrstufiges Kristallisationsverfahren für die Reinigung der ionischen Flüssigkeit eingesetzt werden. Vorteilhaft wird die Kristallisation mehrstufig als fraktionierte Kristallisation ausgeführt. Die einzelnen Kristallisationsstufen definieren dabei unterschiedliche Reinheitsgrade der gewünschten Verbindung. In der niedrigsten Kristallisationsstufe sind die Verunreinigungen am stärksten aufkonzentriert, in der höchsten Kristallisationsstufe liegt die gewünschte Verbindung in der gereinigten Form vor, in welcher die Verunreinigungen am stärksten abgereichert sind. Beim mehrstufigen Kristallisationsverfahren wird der nicht kristallisierte Rückstand einer Kristallisationsstufe der nächst niedrigeren Kristallisationsstufe zugeführt. Die abgeschiedenen Kristalle einer Kristallisationsstufe werden vorzugsweise geschwitzt und die aufgefangene Schwitzphase wieder dem Einsatzgemisch der gleichen Stufe zugegeben, oder sie wird in zwei Fraktionen unterteilt, von welchen Fraktionen die erste Fraktion dem Rückstand der Kristallisationsstufe und die zweite Fraktion dem Einsatzgemisch der gleichen Stufe zugegeben wird. Das verbleibende Kristallisat wird dann abgeschmolzen und der nächst höheren Kristallisationsstufe zugeführt. Grundsätzlich können eine beliebige Anzahl von Kristallisationsstufen aneinander gereiht werden. In der Praxis werden so viele Kristallisationsstufen verwendet, dass das Kristallisat der höchsten Kristallisationsstufe die gewünschte Reinheit hat

Im Rückstand der niedrigsten Kristallisationsstufe sind die Verunreinigungen angereichert. Im vorliegenden Fall enthält der Rückstand die Entrainer - Substanzen zusammen mit den übrigen Verunreinigungen.

### Ausrührungsbeispiele

Die Wirksamkeit der Aufreinigung von Chloriden oder Bromiden von 1-Ethyl-3-methylimidazolium, 1-Butyl-3-methylimidazolium, 1-Hexyl-3-methylimidazolium oder 1-Octyl-3-methylimidazolium lässt sich durch Zugabe von 1-Methylimidazol als Entrainersubstanz steigern. Die strukturelle Ähnlichkeit besteht hier zwischen den Imidazol-Ringen der Entrainersubstanz und der Imidazolium-Kationen. Eine ähnliche Wirkung ergibt sich jedoch auch unter Zugabe von z. B. Oktan, welches als Entrainersubstanz eine strukturelle Affinität zu den Ethyl-, Butyl-, Hexyl- oder Octylgruppen der oben erwähnen ionischen Verbindungen aufweist. Ein weiteres Beispiel sind Chloride oder Bromide von Ethyl- bzw. Methylpyridinium, deren Aufreinigung durch Zugabe von Pyridin gesteigert wird. Ein weiteres Beispiel ist eine ionische Flüssigkeit bestehend aus Imidazolium als Kation und Toluolsulfat als Anion, deren Aufreinigungswirkung unter Zugabe von Benzol, Xylol, Toluol oder einer Mischung von solchen Substanzen gesteigert werden kann. In diesem Beispiel weisen die Entrainersubstanzen eine strukturelle Ähnlichkeit mit den Toluolsulfat-Anionen auf.

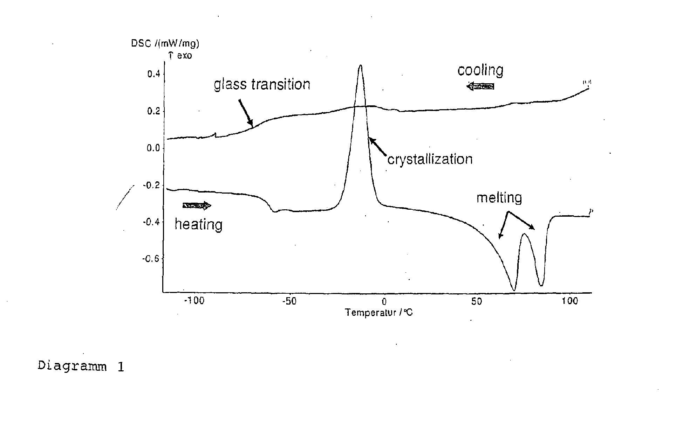

Die Erfindung wird nachfolgend anhand des beiliegenden Diagramms 1, welches die Differentialscanningkalorimetrie von EMIM-Chlorid darstellt, näher erläutert.

Das Diagramm zeigt die Kühl- und Aufheizkurven für EMIM-Chlorid. Beim Abkühlen von 100 °C bis - 100 °C konnten keine Peaks erkannt werden, die auf eine Kristallisation schliessen lassen würden. Der Kurvenverlauf lässt darauf schliessen, dass eine amorphe (glasartige) Erstarrung erfolgte.

Beim Wiedererwärmen tritt ein grosser exothermer Peak bei ca. -10 °C auf, der durch Kristallisation erzeugt wird. Bei Temperaturen von ca. 70 und 85 °C sind zwei endotherme Peaks ersichtlich, welche durch Modifikationsumwandlungen und Schmelzen erzeugt werden. Erfindungsgemäss wird das Erwärmen vor dem Überschreiten der Temperatur des zweiten endothermen Peaks abgebrochen, damit die höher schmelzende Modifikation nicht abgeschmolzen wird. Diese nicht abgeschmolzene Kristallmasse bildet dann die Keime für die nachfolgende Kristallisation.
Ionische Flüssigkeiten, welche einer Reinigung gemäss dem erfindungsgemässen Verfahren zugänglich sind, sind beispielsweise Substanzen, die der allgemeinen Formel aA^{m+} bXⁿ⁻ entsprechen, wobei N=1 oder n=2 oder m=2 und a · m = b · n ist und das Kation ausgwählt ist aus
quaternären Ammonium-Kationen der allgemeinen Formel [R"'][N+]([R']) ([R"]) [R],
quaternären Phosphonium Kationen der allgemeinen Formel [R"'][P+]([R']) ([R"]) [R],
substituierten oder unsubstituierten Imidazoliumkationen der allgemeinen Formel [R]N1C=C[N+]([R'])=C1
substituierten oder unsubstituierten Morpholiniumkationen der allgemeinen Formel [R]N+]1CC[O]CC1,
substituierten oder unsubstituierten Oxazoliniumkationen der allgemeinen Formel [R]N+]1=COCC1,
substituierten oder unsubstituierten Pyridiniumkationen der allgemeinen Formel [R]N+]1=CC=CC=C1,
substituierten oder unsubstituierten Pyrrolidiniumkationen der allgemeinen Formel [R]N+]1([R']CCCC1,
substituierten oder unsubstituierten Pyrazoliniumkationen der allgemeinen Formel [R]N+]1C=CCC=N1,
substituierten oder unsubstituierten Triazoliumkationen der allgemeinen Formeln [R]N+]1([R'])N=CC=N1 oder [R]N+]1([R'])C=NC=N1,
substituierten oder unsubstituierten Guanidiniumkationen der allgemeinen Formel [R']N([R])C(N([R"])[R"])=[N+]([R'"])[R'"],
und das Anion ausgewählt ist aus der Gruppe bestehend aus den Halogeniden, Tetrafluoroborat, RBF₃-, Hexafluorophosphat, RRR'PF₃-, Phosphat, PR'PO₄-, Dicyanamid, Carboxylat R-COO-, Sulfonat R-SO₃-, Benzolsulfonat, Toluolsulfonat, organischen Sulfaten R-O-SO₃-, bsi(sulfon)imdiden R-SO₂-N-SO₂-R', Imiden der Struktur
[R']S([N-])C([R])=O)(=O)=O, SCN-, CN-, Nitrat, Nitrit, Chlorat, Perchlorat, wobei R und R' unabhängig voneinander ein linearer oder verzweigter 1 bis 20 Kohlenstoffatome enthaltender aliphatischer oder alicyclischer Alkyl- oder ein C5-C15-Aryl-, C5-C15-Aryl-C1-C6-alkyl- oder C1-C6-Alkyl-C5-C15-aryl-Rest sein können, die durch Halogenatome und/oder Hydroxylgruppen substituiert sein können.

## Patentansprüche

1. Verfahren zur Reinigung einer ionischen Flüssigkeit, mittels fraktionierter Kristallisation, wobei die ionische Flüssigkeit ein Salz einer organischen Verbindung ist, die unterhalb 150°C in flüssigem Zustand vorliegt, bei welcher
a) ein Teil der ionischen Flüssigkeit durch Temperaturabsenkung kristallisiert und
b) das gebildete Kristallisat von der Restflüssigkeit abgetrennt wird,
**dadurch gekennzeichnet, dass** die ionischen Flüssigkeit zuerst mit einer bestimmten Menge mindestens einer Entrainer-Substanz versetzt wird und danach kristallisiert wird sodass die Löslichkeit von Verunreinigungen erhöht wird und die Verunreinigungen dadurch verstärkt in der Flüssigkeit verbleiben.

2. Verfahren nach Anspruch 1, **dadurch gekennzeichnet, dass** als Entrainer-Substanz eine Verbindung eingesetzt wird mit strukturähnlichen Eigenschaften zur ionischen Flüssigkeit.

3. Verfahren nach Anspruch 1, **dadurch gekennzeichnet, dass** als Entrainer-Substanz eine Verbindung eingesetzt wird mit strukturähnlichen Eigenschaften zu in der ionischen Flüssigkeit enthaltenen Verunreinigungen.

4. Verfahren nach einem der Ansprüche 1 bis 3, **dadurch gekennzeichnet, dass** die gewichtsmässige Menge der zur verunreinigten ionischen Flüssigkeit zugesetzten Entrainer - Substanz weniger als 50 Gewichtsprozente, vorzugsweise weniger als 30 Gewichtsprozente und ganz besonders bevorzugt weniger als 10 Gewichtsprozente der ionischen Flüssigkeit beträgt.

5. Verfahren nach einem der Ansprüche 1 bis 4, **dadurch gekennzeichnet, dass** als Entrainer-Substanz bekannte klassische Lösungsmittel eingesetzt werden, welche strukturähnliche Eigenschaften zu den in der zu reinigenden ionischen Flüssigkeit enthaltenen Verunreinigungen aufweisen.

6. Verfahren nach Anspruch 5, **dadurch gekennzeichnet, dass** als Lösungsmittel Methanol, Ethanol, i-Propanol, Butanol, Pentan, Hexan, Aceton, Methylethylketon, Tetrahydrofuran, Dimethylsulfoxid, Toluol, Benzol, Essigsäuremethylester, Essigsäureethylester, oder ein Gemisch von einem oder mehren der vorgenannten Lösungsmittel eingesetzt wird.

7. Verfahren nach einem der Ansprüche 1 bis 4, **dadurch gekennzeichnet, dass** die Kristallisation unter Überdruck durchgeführt und als Entrainer-Substanz in der ionischen Flüssigkeit lösliche Gase wie CO₂, CH₄, N₂ eingesetzt werden.

8. Verfahren nach einem der Ansprüche 1 bis 4, **dadurch gekennzeichnet, dass** als Entrainer-Substanz in der ionischen Flüssigkeit kondensierbare Gase wie Methan, Ethan, Propan, n-Butan und kurzkettige halogenierte Kohlenwasserstoffe eingesetzt werden.

9. Verfahren nach einem der Ansprüche 1 bis 8, **dadurch gekennzeichnet, dass** die Kristallisation dynamisch durchgeführt wird.

10. Verfahren nach einem der Ansprüche 1 bis 8, **dadurch gekennzeichnet, dass** die Kristallisation statisch durchgeführt wird.

11. Verfahren nach einem der Ansprüche 1 bis 10, **dadurch gekennzeichnet, dass** die Kristallisation als Schichtkristallisation durchgeführt wird.

12. Verfahren nach einem der Ansprüche 1 bis 10, **dadurch gekennzeichnet, dass** die Kristallisation als Suspensionskristallisation durchgeführt wird.

13. Verfahren nach einem der Ansprüche 1 bis 12, **dadurch gekennzeichnet, dass** eine Kombination verschiedener Kristallisationsverfahren eingesetzt wird.

14. Verfahren nach einem der Ansprüche 1 bis 13, **dadurch gekennzeichnet, dass** eine Kombination von statischer und dynamischer Schichtkristallisation, vorzugsweise vom Typ Fallfilm, eingesetzt wird.

15. Verfahren nach einem der Ansprüche 1 bis 14, **dadurch gekennzeichnet, dass** das Kristallisat geschwitzt wird.

16. Verfahren nach einem der Ansprüche 1 bis 15, **dadurch gekennzeichnet, dass** die Kristallisation mehrstufig durchgeführt wird.

## Claims

1. A method for the purification of an ionic liquid by means of fractional crystallization, wherein the ionic liquid is a salt of an organic compound which is present in a liquid state below 150°C, in which
a.) a part of the ionic liquid is crystallized by the reduction of temperature and
b.) the formed crystallizate is separated from the liquid remainder,
**characterized in that** the ionic liquid is first charged with a certain amount of at least one entrainer substance and is then crystallized, so that the solubility of contaminants is increased and thereby the contaminants increasingly remain in the liquid.

2. A method in accordance with claim 1, **characterized in that** a compound is used as an entrainer substance which has similar structural properties to the ionic liquid.

3. A method in accordance with claim 1, **characterized in that** a compound is used as an entrainer substance which has structural properties similar to the contaminations contained in the ionic liquid.

4. A method in accordance with any one of the claims 1 to 3, **characterized in that** the quantity by weight of the entrainer substance added to the contaminated ionic liquid is less than 50 per cent per weight of the ionic liquid, preferably less than 30 per cent per weight and in particular preferably less than 10 per cent per weight.

5. A method in accordance with any one of the claims 1 to 4, **characterized in that** known classical solvents are used as a entrainer substance which have similar structural properties to the ionic liquid containing contaminants which is to be purified.

6. A method in accordance with claim 5, **characterized in that** methanol, ethanol, i-propanol, butanol, pentane, hexane, acetone, methylethyl-ketone, tetra hydrofuran, dimethyl-sulfoxide, toluene, benzene, methyl acetate, ethyl acetate or a mixture of one or more of the above named solvents is used as the solvent.

7. A method in accordance with any one of the claims 1 to 4, **characterized in that** the crystallization is carried out in positive pressure and **in that** soluble gases such as CO₂, CH₄, N₂ are used as an entrainer substance in the ionic liquid.

8. A method in accordance with any one of the claims 1 to 4, **characterized in that** gases condensable in the liquid, such as methane, ethane, propane, n-butane and short chained halogenated hydrocarbons are used as the entrainer substance in the ionic liquid.

9. A method in accordance with any one of the claims 1 to 8, **characterized in that** the crystallization is carried out dynamically.

10. A method in accordance with any one of the claims 1 to 8, **characterized in that** the crystallization is carried out statically.

11. A method in accordance with any one of the claims 1 to 10, **characterized in that** the crystallization is carried out as layer crystallization.

12. A method in accordance with any one of the claims 1 to 10, **characterized in that** the crystallization is carried out as suspension crystallization.

13. A method in accordance with any one of the claims 1 to 12, **characterized in that** a combination of different crystallization methods is used.

14. A method in accordance with any one of the claims 1 to 13, **characterized in that** a combination of static and dynamic layered crystallization, preferably of the falling film type, is used.

15. A method in accordance with any one of the claims 1 to 14, **characterized in that** the crystallizate is sweated.

16. A method in accordance with any one of the claims 1 to 15, **characterized in that** the crystallization is carried out in multiple steps.

## Revendications

1. Procédé de purification d'un liquide ionique, au moyen d'une cristallisation fractionnée, où le liquide ionique est un sel d'un composé organique, qui est présent en dessous de 150°C à l'état liquide, dans lequel
a) une partie du liquide ionique est cristallisée par un abaissement de la température et
b) le cristallisat formé est séparé du liquide restant, **caractérisé en ce que** le liquide ionique est mélangé d'abord avec une quantité déterminée d'au moins une substance d'entraînement et est cristallisé ensuite de sorte que la solubilité d'impuretés est augmentée, et les impuretés subsistent donc d'une manière renforcée dans le liquide.

2. Procédé selon la revendication 1, **caractérisé en ce que**, comme substance d'entraînement, un composé est utilisé ayant des caractéristiques structurelles similaires au liquide ionique.

3. Procédé selon la revendication 1, **caractérisé en ce que**, comme substance d'entraînement, un composé est utilisé avec des caractéristiques d'une structure similaire aux impuretés contenues dans le liquide ionique.

4. Procédé selon l'une des revendications 1 à 3, **caractérisé en ce que** la quantité en poids de la substance d'entraînement ajoutée au liquide ionique contenant des impuretés représente moins que 50 pour cent en poids, de préférence moins que 30 pour cent en poids et selon la plus grande préférence moins que 10 pour cent en poids du liquide ionique.

5. Procédé selon l'une des revendications 1 à 4, **caractérisé en ce que** comme substance d'entraînement, des solvants classiques connus peuvent être utilisés, qui ont des caractéristiques structurelles similaires aux impuretés contenues dans le liquide ionique à purifier.

6. Procédé selon la revendication 5, **caractérisé en ce qu'**est utilisé comme solvant du méthanol, éthanol, i-propanol, butanol, pentane, hexane, acétone, méthyléthylkétone, tétrahydrofurane, diméthylsulfoxyde, toluol, benzol, méthylester de l'acide acétique, éthylester de l'acide acétique ou un mélange d'un ou de plusieurs des solvants précités.

7. Procédé selon l'une des revendications 1 à 4, **caractérisé en ce que** la cristallisation est exécutée sous surpression et, comme substance d'entraînement dans le liquide ionique, des gaz solubles comme CO₂, CH₄, N₂ peuvent être utilisés.

8. Procédé selon l'une des revendications 1 à 4, **caractérisé en ce que** comme substance d'entraînement dans le liquide ionique, des gaz aptes à être condensés comme le méthane, éthane, propane, n-butane et des hydrocarbures halogénés à chaîne courte peuvent être utilisés.

9. Procédé selon l'une des revendications 1 à 8, **caractérisé en ce que** la cristallisation est exécutée d'une manière dynamique.

10. Procédé selon l'une des revendications 1 à 8, **caractérisé en ce que** la cristallisation est exécutée d'une manière statique.

11. Procédé selon l'une des revendications 1 à 10, **caractérisé en ce que** la cristallisation est exécutée comme cristallisation de couches.

12. Procédé selon l'une des revendications 1 à 10, **caractérisé en ce que** la cristallisation est exécutée comme cristallisation en suspension.

13. Procédé selon l'une des revendications 1 à 12, **caractérisé en ce qu'**une combinaison de différents procédés de cristallisation est utilisée.

14. Procédé selon l'une des revendications 1 à 13, **caractérisé en ce qu'**une combinaison de cristallisations de couches statiques et dynamiques, de préférence du type Fallfilm est utilisée.

15. Procédé selon l'une des revendications 1 à 14, **caractérisé en ce que** le cristallisat est soumis à une exsudation.

16. Procédé selon l'une des revendications 1 à 15, **caractérisé en ce que** la cristallisation est exécutée à plusieurs étages.
